# EUROPEAN PATENT APPLICATION

(11) **EP 4 787 534 A1**
(43) Date of publication of application: **05.08.2026**
(21) Application number: 24871662.3
(22) Date of filing: 27.08.2024
(51) Int. Cl.: H01M 10/0587, H01M 4/13

(54) **SECONDARY BATTERY**

(30) Priority: 29.09.2023 JP 2023169178
(71) Applicant: Panasonic Energy Co., Ltd., Moriguchi-shi, Osaka 570-8511 (JP)
(72) Inventor: TANIGUCHI, Hiroki, Osaka 571-0057 (JP)
(74) Representative: Eisenführ Speiser
(86) International application number: PCT/JP2024/030481
(87) International publication number: WO 2025/069861

(57) **Abstract**

A first core body exposed portion (41a) to which a positive electrode lead (20) is joined is provided on a first surface of a positive electrode (11), and a second core body exposed portion (41b), which at least partially overlaps the first core body exposed portion (41a) in the thickness direction of the positive electrode (11), is provided on a second surface thereof. The leading end of a second non-tail portion (58) provided on the second surface is disposed so as to oppose, in the thickness direction of the positive electrode (11), a first flat portion (42c) of a first mixture layer (42a) adjacent to a first tail portion (57) provided on the first surface. The leading end of a first non-tail portion (48) provided on the first surface is disposed so as to oppose, in the thickness direction of the positive electrode (11), a second flat portion (42d) of a second mixture layer (42b) adjacent to a second tail portion (57) provided on the second surface.

## Description

### TECHNICAL FIELD

The present disclosure relates to a secondary battery.

### BACKGROUND ART

As secondary batteries, there is conventionally a cylindrical battery disclosed in Patent Literature 1. The cylindrical battery comprises an electrode assembly having a positive electrode and a negative electrode wound through a separator along a longitudinal direction, a bottomed cylindrical housing can that houses the electrode assembly, and a sealing assembly that is crimped and fixed to an opening portion of the housing can through a gasket. A positive electrode core exposed portion is provided in a longitudinal intermediate portion of the positive electrode in such a way that the positive electrode core exposed portion is arranged so as to be sandwiched by a positive electrode mixture layer in the longitudinal direction. One end portion of a positive electrode lead is joined to the positive electrode core exposed portion, and the other end portion of the positive electrode lead is joined to an inner surface of the sealing assembly. In addition, one end portion of a negative electrode lead is joined to a winding finish-side end portion of the negative electrode, and the other end portion of the negative electrode lead is joined to the inner surface of the bottom of the housing can.

### CITATION LIST

### PATENT LITERATURE

PATENT LITERATURE 1: Japanese Unexamined Patent Application Republication No. 2019-044770

### SUMMARY

In the electrodes of secondary batteries, the mixture layer expands and contracts with charging and discharging, though the core exposed portion does not expand and contract. Therefore, when the core exposed portion is provided in a longitudinal intermediate portion of the electrode, deformation, such as wrinkles, of a core is likely to occur at a boundary portion between a mixture layer forming region and the core exposed portion. Accordingly, it is an advantage of the present disclosure to provide a cylindrical battery that is less likely to cause deformation of a core at a boundary portion between the mixture layer forming region and the core exposed portion.

In order to solve the above problem, a cylindrical battery according to the present disclosure is a secondary battery, comprising an electrode assembly having two electrodes different in polarity from each other, the two electrodes being wound through a separator along a longitudinal direction, in which a first surface of one electrode out of the two electrodes has a first core exposed portion that is arranged so as to be sandwiched in the longitudinal direction by a first mixture layer provided on the first surface and that is joined to an electrode lead, a second surface of the one electrode has a second core exposed portion that is arranged so as to be sandwiched in the longitudinal direction by a second mixture layer provided on the second surface and that is arranged at least partially facing the first core exposed portion in a thickness direction, the first mixture layer has a first tail portion that is adjacent to an end portion of the first core exposed portion on a first side in the longitudinal direction and that has a plurality of first tails extending in a longitudinal direction, and a first non-tail portion that is adjacent to an end portion of the first core exposed portion on a second side in the longitudinal direction and that has a distal end extending in a substantially width direction, and the second mixture layer has a second non-tail portion that is adjacent to an end portion of the second core exposed portion on the first side in the longitudinal direction and that has a distal end extending in the substantially width direction, and a second tail portion that is adjacent to an end portion of the second core exposed portion on the second side in the longitudinal direction and that has a plurality of second tails extending in the longitudinal direction, the distal end of the second non-tail portion is arranged facing, in the thickness direction, a first flat portion of the first mixture layer adjacent to the first tail portion, and the distal end of the first non-tail portion is arranged facing, in the thickness direction, a second flat portion of the second mixture layer adjacent to the second tail portion.

According to the secondary battery according to the present disclosure, deformation of the core is less likely to occur at the boundary portion between the mixture layer forming region and the core exposed portion.

### BRIEF DESCRIPTION OF THE DRAWING

FIG. 1 is an axial sectional view of a cylindrical battery according to an embodiment of the present disclosure.
FIG. 2 is a plan view around a first core exposed portion where a positive electrode lead is joined on a winding outer surface constituting a first surface of a positive electrode.
FIG. 3 is a sectional view taken along a line A-A in FIG. 2.
FIG. 4 is a sectional view corresponding to FIG. 3 in a battery of a reference example.
FIG. 5 is a plan view corresponding to FIG. 2 in a battery of a modification.

### DESCRIPTION OF EMBODIMENTS

Hereinafter, an embodiment of the secondary battery according to the present disclosure will be described in detail with reference to the drawings. The secondary battery of the present disclosure may be a secondary battery comprising a winding type electrode assembly, a secondary battery using an aqueous electrolyte, or a secondary battery using a non-aqueous electrolyte. The secondary battery of the present disclosure may be a cylindrical battery comprising a bottomed cylindrical housing can, a rectangular battery comprising a rectangular housing can, or a pouch-type battery comprising a casing constituted of a laminated sheet including a metal layer and a resin layer. As a cylindrical battery constituting one embodiment, a cylindrical battery using a non-aqueous electrolyte (lithium-ion battery) is illustrated below, though the cylindrical battery of the present disclosure is not limited thereto.

It is assumed from the beginning that a new embodiment is constructed by appropriately combining characteristic portions of the embodiment or modifications thereof as will be described below. In the embodiment below, like component members are designated by like reference signs to omit redundant description. The plurality of drawings also include schematic drawings, and throughout the different drawings, dimensional ratios of length, width, height, and the like, do not necessarily match for each member. In this specification, the side of a sealing assembly 17 in an axial direction (height direction) of a cylindrical battery 10 is defined as "upper side", and the side of a bottom portion 68 of a housing can 16 in the axial direction is defined as "lower side". Among the component members described below, those not included in an independent claim that represents the highest-level concept are optional and not essential component members.

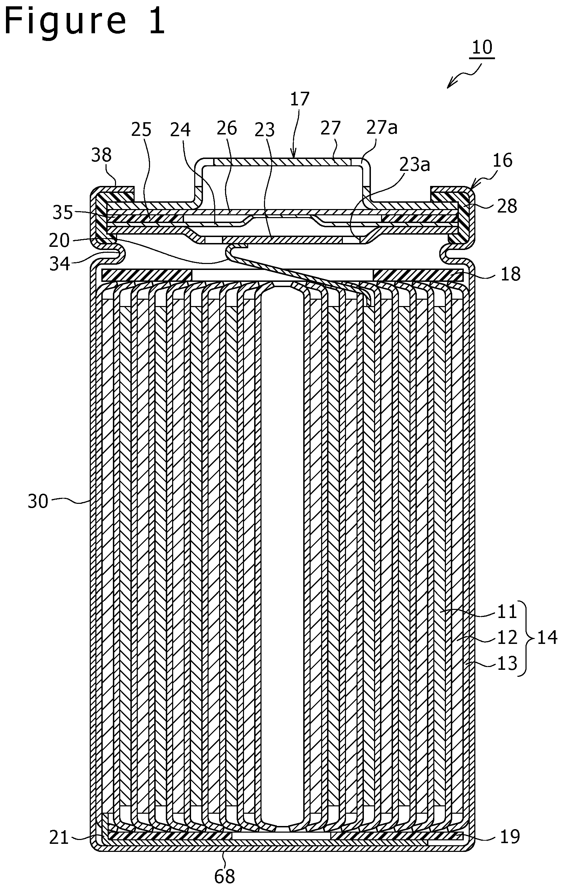

FIG. 1 is an axial sectional view of a cylindrical battery 10 according to an embodiment of the present disclosure. As shown in FIG. 1, the cylindrical battery (hereinafter simply referred to as the battery) 10 comprises a winding type electrode assembly 14, a non-aqueous electrolyte (not shown), a bottomed cylindrical metallic housing can 16 that houses the electrode assembly 14 and the non-aqueous electrolyte, and a sealing assembly 17 that seals an opening portion of the housing can 16. The electrode assembly 14 has a winding structure formed by winding a long-shaped positive electrode 11 and a long-shaped negative electrode 12 through two long-shaped separators 13 along the longitudinal direction.

In order to prevent lithium deposition, the negative electrode 12 is formed with a dimension that is slightly larger than the positive electrode 11. The negative electrode 12 is formed to be longer in a longitudinal direction and a width direction (short direction) than the positive electrode 11. The two separators 13 are formed with a dimension that is at least slightly larger than the positive electrode 11 and are arranged, for example, to hold the positive electrode 11 therebetween. The negative electrode 12 may constitute a winding start end of the electrode assembly 14. However, the separators 13 typically extend beyond a winding start-side end of the negative electrode 12, and the winding start-side ends of the separators 13 constitute the winding start end of the electrode assembly 14.

The non-aqueous electrolyte has ion conductivity (for example, lithium ion conductivity). The non-aqueous electrolyte may be a liquid electrolyte (electrolyte solution) or a solid electrolyte. The liquid electrolyte (electrolyte solution) contains non-aqueous solvent and electrolyte salt solved in the non-aqueous solvent. As the non-aqueous solvent, there may be used, for example, esters, ethers, nitriles, amides, and mixed solvents of two or more of the group consisting of these. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen substituted product (e.g., fluoroethylene carbonate) that replaces at least some of the hydrogen in these solvents with halogen atoms such as fluorine. As the electrolyte salt, lithium salt such as LiPF₆ is used, for example.

As the solid electrolyte, there may be used, for example, solid or gel-like polymer electrolyte, inorganic solid electrolyte, or the like. The polymer electrolyte contains, for example, lithium salt and matrix polymer, or non-aqueous solvent, lithium salt, and matrix polymer. As the matrix polymer, a polymer material that turns into a gel by absorbing non-aqueous solvent is used, for example. As the polymer material, there may be used, for example, fluororesin, acrylic resin, and polyether resin, or the like. As the inorganic solid electrolyte, materials that are publicly known in all solid lithium-ion secondary batteries (e.g., oxide-based solid electrolyte, sulfide-based solid electrolyte, halogen-based solid electrolyte, etc.) may be used.

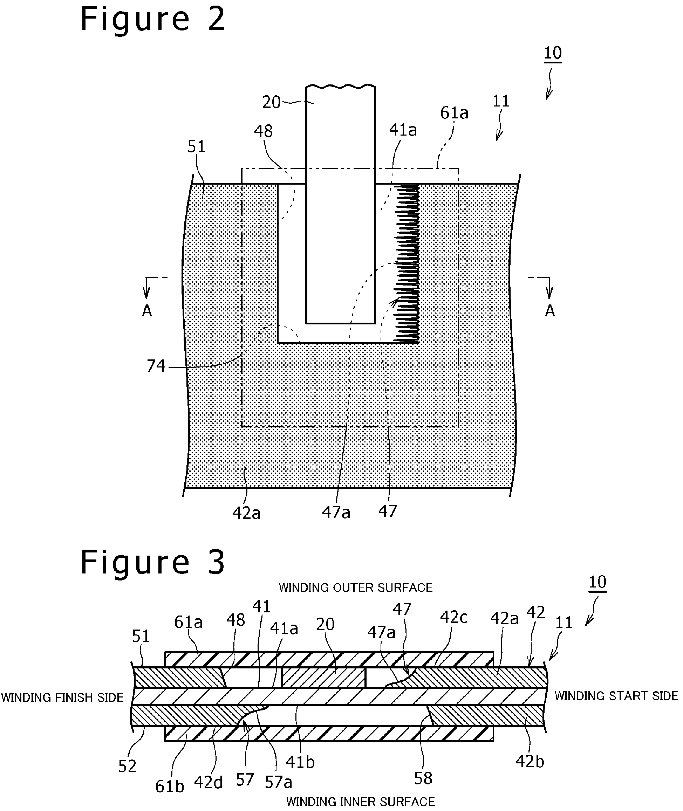

The positive electrode 11 has a positive electrode core 41 (see FIG. 3) and a positive electrode mixture layer 42 (see FIG. 3) formed on both surfaces of the positive electrode core. As the positive electrode core 41, there may be used a foil made of metal, such as aluminum and aluminum alloy, that is stable in a potential range of the positive electrode 11, a film with the metal arranged on its surface layer, or the like. The positive electrode mixture layer 42 contains a positive electrode active material, a conductive agent, and a binding agent. The positive electrode 11 can be fabricated by, for example, coating the positive electrode core 41 with positive electrode mixture slurry containing a positive electrode active material, a conductive agent, a binding agent, or the like, drying the coating, and then compressing the coating to form a positive electrode mixture layer 42 on both the surfaces of the positive electrode core 41.

The positive electrode active material is constituted with lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. Preferable examples of the lithium-containing metal composite oxide include a composite oxide containing at least one of the group consisting of Ni, Co, Mn, and Al.

Examples of the conductive agent contained in the positive electrode mixture layer 42 may include carbon materials such as carbon black, acetylene black, Ketjenblack, and graphite. Examples of the binding agent contained in the positive electrode mixture layer may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salts, polyethylene oxide (PEO), or the like.

The negative electrode 12 has a negative electrode core and a negative electrode mixture layer formed on both the surfaces of the negative electrode core. As the negative electrode core, there may be used a foil made of metal, such as copper and copper alloy, that is stable in a potential range of the negative electrode 12 a film with the metal arranged on its surface layer, or the like. The negative electrode mixture layer contains a negative electrode active material and a binding agent. The negative electrode 12 can be fabricated by, for example, coating the negative electrode core with negative electrode mixture slurry containing a negative electrode active material, a binding agent, or the like, drying the coating, and then compressing the coating to form a negative electrode mixture layer on both the surfaces of the negative electrode core.

As the negative electrode active material, a carbon material that reversibly absorbs and releases lithium ions is typically used. Preferable carbon materials include natural graphite such as flake graphite, massive graphite, and earthy graphite, and artificial graphite such as massive artificial graphite, and graphitized mesophase carbon microbeads. The negative electrode mixture layer may contain a silicon (Si) material containing Si. As the negative electrode active material, there may be used metals, other than Si, that alloy with lithium, or alloys containing the metals, compounds containing the metals, or the like.

As the binding agent contained in the negative electrode mixture layer, there may be used, as in the case of the positive electrode 11, fluororesin, PAN, polyimide resin, acrylic resin, polyolefin resin, or the like, though styrene-butadiene rubber (SBR) or its modification products are preferably used. For example, the negative electrode mixture layer may contain, in addition to SBR or the like, CMC or its salt, polyacrylic acid (PAA) or its salt, polyvinyl alcohol, or the like.

As the separators 13, a porous sheet with ion permeability and insulation properties is used. Specific examples of the porous sheet include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

As shown in FIG. 1, the positive electrode lead 20 is electrically connected to an intermediate portion such as a central portion of the positive electrode core 41 (see FIG. 3) in a winding direction, and the negative electrode lead 21 is electrically connected to a winding finish-side end portion of the negative electrode core in the winding direction. The battery 10 has an insulating plate 18 above the electrode assembly 14 and an insulating plate 19 below the electrode assembly 14. The positive electrode lead 20 extends toward the sealing assembly 17 through a through-hole of the insulating plate 18, and the negative electrode lead 21 extends toward the bottom portion 68 of the housing can 16 through the outside of the insulating plate 19. The positive electrode lead 20 is connected to the lower surface of a terminal plate 23 of the sealing assembly 17 by welding or other processing. A terminal cap 27, which constitutes a top plate of the sealing assembly 17, is electrically connected to the terminal plate 23, so that the terminal cap 27 serves as a positive electrode terminal. The negative electrode lead 21 is connected to an inner surface of the bottom portion 68 of the metallic housing can 16 by welding or other processing, so that the housing can 16 serves as a negative electrode terminal.

The battery 10 comprises a resin gasket 28 arranged between the housing can 16 and the sealing assembly 17. The sealing assembly 17 is crimped and fixed to an opening portion of the housing can 16 through the gasket 28. As a result, internal space of the battery 10 is sealed. The gasket 28 is held between the housing can 16 and the sealing assembly 17 to insulate the sealing assembly 17 against the housing can 16. The gasket 28 functions as a sealing material to maintain the inside of the battery airtight and also functions as an insulating material to insulate between the housing can 16 and the sealing assembly 17.

The housing can 16 has a cylindrical portion 30 and the bottom portion 68, and the cylindrical portion 30 includes an annular grooved portion 34 and an annular shoulder portion 38. The grooved portion 34 is formed by recessing a portion of the cylindrical portion 30 radially inward by a spinning process. The shoulder portion 38, which is formed when an upper end portion of the cylindrical portion 30 is bent radially inward and crimped to a circumferential edge portion 35 of the sealing assembly 17, extends radially inward at the upper end portion of the cylindrical portion 30.

The sealing assembly 17 has a structure formed by stacking the terminal plate 23, a lower vent member 24, an insulating member 25, an upper vent member 26, and the terminal cap 27 in order from the side of the electrode assembly 14. Each member constituting the sealing assembly 17 has, for example, a disc shape or a ring shape, and each member except the insulating member 25 is electrically connected to each other. The terminal plate 23 has at least one through-hole 23a. The lower vent member 24 and the upper vent member 26 are connected at their center portions, with the insulating member 25 being interposed between their respective circumferential edge portions. The terminal cap 27 has a convex shape with its radial center portion protruding outward.

When the battery 10 generates abnormal heat and the internal pressure of the battery 10 increases, the lower vent member 24 deforms so as to push the upper vent member 26 toward the terminal cap 27 and breaks, resulting in interruption of a current path between the lower vent member 24 and the upper vent member 26. As the internal pressure further increases, the upper vent member 26 breaks, so that gas is discharged through a through-hole 27a of the terminal cap 27. As the gas is discharged, excessive increase in internal pressure of the battery 10 and resultant busting of the battery 10 can be prevented, so that the safety of the battery 10 can be enhanced.

The description has been given of the case where the sealing assembly 17 has a stacked structure including two rapture plates (lower vent member 24 and upper vent member 26), and has the protruding terminal cap 27 that covers the rapture plates. However, the sealing assembly may be constituted of only the rupture plates or may have a structure in which an internal terminal plate, an insulating plate, and a rapture plate are stacked in order from the electrode assembly side. Alternatively, the sealing assembly may not have any rapture plate, and the bottom of the housing can may have a thin-walled easily breakable portion that breaks when the battery generates abnormal heat.

The configuration of the positive electrode 11 is described below in more detail with reference to FIGS. 2 to 4. FIG. 2 is a plan view around a first core exposed portion 41a where the positive electrode lead 20 is joined on a winding outer surface 51 constituting a first surface of the positive electrode 11. FIG. 3 is a sectional view taken along a line A-A in FIG. 2, when the battery 10 is cut along a cross section that includes the longitudinal direction and the thickness direction and also extends through the positive electrode lead 20. In FIG. 2, an outer edge of an insulating tape 61a is shown by a virtual line.

As shown in FIG. 2, the first core exposed portion 41a joined to the positive electrode lead 20 as an example of the electrode lead is configured so as to be sandwiched in the longitudinal direction by a first mixture layer 42a that is formed on the winding outer surface 51 of the positive electrode mixture layer 42. A portion of the first mixture layer 42a is arranged adjacent to the first core exposed portion 41a in the width direction.

The first mixture layer 42a is fabricated, for example, as follows. A hoop-shaped positive electrode core 41 is unwound with a drive roll (not shown), carried to one longitudinal side at constant speed, and is made to run in the longitudinal direction at constant speed below first and second discharge portions (not shown) that discharge positive electrode mixture slurry. At the time, the positive electrode mixture slurry is discharged intermittently from the second discharge portion to the range where a first core exposed portion 41a is formed in the width direction of the positive electrode core 41, and the positive electrode mixture slurry is discharged continuously from the first discharge portion to the range where a first mixture layer 42a is formed adjacent to the first core exposed portion 41a in the width direction. The positive electrode mixture slurry is not discharged from the second discharge portion to the range where the first core exposed portion 41a is formed in the longitudinal direction. With the discharge of the positive electrode mixture slurry, the first mixture layer 42a shown in FIG. 2 is formed.

As shown in FIGS. 2 and 3, while the first mixture layer 42a formed by the discharge of the positive electrode mixture slurry does not have tails formed at a discharge start end of the positive electrode mixture slurry, a comb-like tail portion 47 is formed in the vicinity of a positive electrode mixture slurry discharge finish end in planar view. Specifically, the first mixture layer 42a has a first tail portion 47 that is adjacent to a first-side end portion of the first core exposed portion 41a in the longitudinal direction of the positive electrode 11 and that has a plurality of first tails 47a extending in the longitudinal direction of the positive electrode 11, and a first non-tail portion 48 that is adjacent to a second-side end portion of the first core exposed portion 41a in the longitudinal direction of the positive electrode 11 and that has a distal end extending in a substantially width direction.

The first side of the positive electrode 11 in the longitudinal direction coincides with a winding start side of the positive electrode 11, and the second side of the positive electrode 11 in the longitudinal direction coincides with a winding finish side of the positive electrode 11 in the longitudinal direction. By discharging the positive electrode mixture slurry to the positive electrode core 41 on a winding inner surface 52 constituting the second surface of the positive electrode 11 by the same method as described above, a second mixture layer 42b is formed, and also a second core exposed portion 41b that is arranged so as to be sandwiched by the second mixture layer 42b and that is arranged at least partially facing the first core exposed portion 41a in a thickness direction is formed.

Although not shown, the planar second mixture layer 42b similar to the first mixture layer 42a is also formed on the winding inner surface 52 of the positive electrode 11, and a portion of the second mixture layer 42b is arranged adjacent to the second core exposed portion 41b in the width direction. As shown in FIG. 3, the second mixture layer 42b has a second non-tail portion 58 that is adjacent to an end portion of the second core exposed portion 41b on the first side of the positive electrode 11 in the longitudinal direction and that has a distal end extending in a substantially width direction, and a second tail portion 57 that is adjacent to an end portion of the second core exposed portion 41b on the second side of the positive electrode 11 in the longitudinal direction and that has plurality of second tails 57a extending in the longitudinal direction of the positive electrode 11.

The distal end of the second non-tail portion 58 is arranged facing, in the thickness direction of the positive electrode 11, a first flat portion 42c of the first mixture layer 42a adjacent to the first tail portion 47 in the longitudinal direction of the positive electrode 11, and the distal end of the first non-tail portion 48 is arranged facing, in a thickness direction of the positive electrode 11, a second flat portion 42d of the second mixture layer 42b adjacent to the second tail portion 57 in the longitudinal direction of the positive electrode 11. On the front and back of the positive electrode 11, insulating tapes 61a and 61b are applied to cover the positive electrode lead 20 and the core exposed portions 41a and 41b.

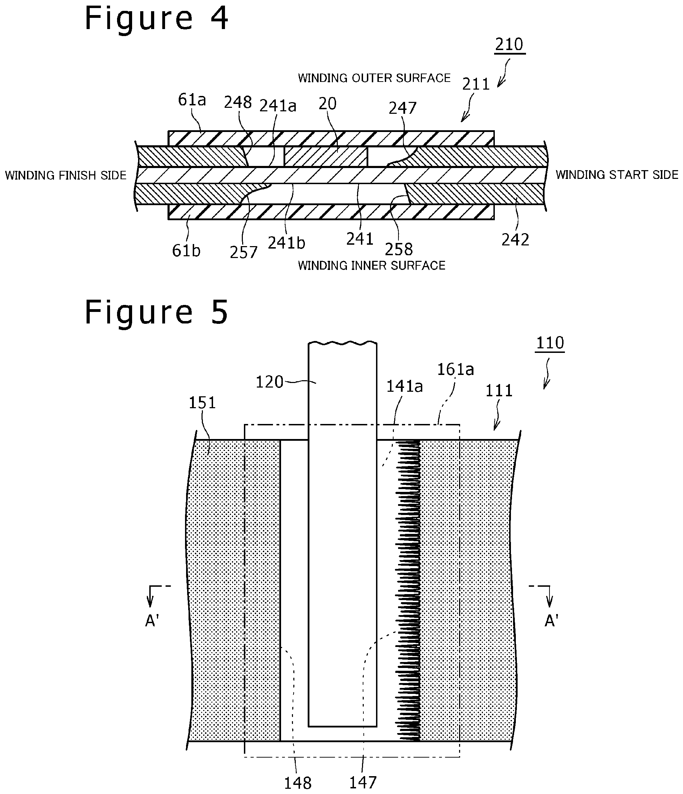

FIG. 4 is a sectional view corresponding to FIG. 3 in a battery 210 of a reference example. In a positive electrode 211 of the battery 210 of the reference example, the distal end of a second non-tail portion 258 is arranged facing a first tail portion 247 in the thickness direction of the positive electrode 211, and the distal end of a first non-tail portion 248 is arranged facing a second tail portion 257 in the thickness direction of the positive electrode 211.

When the mixture layer expands and contracts with charging and discharging, the core exposed portion formed in the longitudinal intermediate portion of the electrode is likely to receive the same stress as a mixture layer forming portion. When a difference in rigidity between the mixture layer forming portion and the core exposed portion increases, deformation, such as wrinkles, of a core is likely to occur at the boundary portion between the mixture layer forming portion and the core exposed portion. Therefore, the deformation, such as wrinkles, of the core is more likely to occur at the boundary portion between the non-tail portion and the core exposed portion than at a boundary portion between the tail portion and the core exposed portion. In the battery 10 of the above embodiment, the distal ends of the non-tail portions 48 and 58 are arranged facing the flat portions 42c and 42d of the positive electrode mixture layer 42 adjacent to the tail portions 47 and 57 in the thickness direction of the positive electrode 11. As a result, change in rigidity in an area from the non-tail portions 48 and 58 to the core exposed portions 41a and 41b is lessened, which makes it possible to restrain deformation of the positive electrode core 41 at the boundary portion between the non-tail portions 48 and 58 and the core exposed portions 41a and 41b. On the other hand, in the battery 210 of the reference example, the distal ends of non-tail portions 248 and 258 of a positive electrode mixture layer 242 are arranged facing tail portions 247 and 257 which are less rigid than flat portions. Accordingly, the effect of relaxing the difference in rigidity in an area from the non-tail portions 248 and 258 to the core exposed portions 241a and 241b becomes insufficient, and therefore the deformation of the positive electrode core 41 cannot sufficiently be restrained.

In addition, the distal ends of the non-tail portions 48 and 58 are arranged facing, in the thickness direction of the positive electrode 11, the flat portions 42c and 42d of the positive electrode mixture layer 42 adjacent to the tail portions 47 and 57. Accordingly, when the positive electrode mixture slurry coating is dried and then compressed with a roller, a lowering length of the roller in the thickness direction is reduced at the boundary portion described above. As a result, the impact that the positive electrode 11 receives from lowering of the roller is reduced, and this also makes it possible to restrain deformation of the boundary portion of the positive electrode core 41.

When a portion of the positive electrode mixture layer 42 is arranged adjacent to the core exposed portions 41a and 41b in the width direction, the range of a rigidity difference generated in the area from the non-tail portions 48 and 58 to the core exposed portions 41a and 41b decreases. Therefore, an advantageous effect of restraining deformation at the boundary portion between the positive electrode core 41 and the positive electrode mixture layer 42 in the present disclosure becomes remarkable.

When a portion of the positive electrode mixture layer 42 is arranged adjacent to the core exposed portions 41a and 41b in the width direction, the lowering length of the roller at the boundary portion in the width direction in the positive electrode 11 is further reduced. Consequently, the impact that the positive electrode 11 receives from lowering of the roller is further reduced, and this further restrains deformation of the boundary portion of the positive electrode core 41.

In order to restrain removal of the positive electrode mixture layer 42 from the positive electrode core 41, the tail portion 57 is preferably arranged adjacent to a winding start-side end portion of the core exposed portion 41a on the winding outer surface 51 of the positive electrode 11. This is because the tail portion 57 is less likely to be removed from the positive electrode core 41 than the non-tail portion 58.

The present disclosure is not limited to the embodiment and its modifications disclosed, and various improvements and changes are possible without departing from the scope of the Claims of the present application and any equivalents thereof.

FIG. 5 is a plan view corresponding to FIG. 2 in a battery 110 of a modification. As shown in FIG. 5, a first core exposed portion 141a may be provided from one end to the other end of a positive electrode 111 in the width direction on a winding outer surface 511 that is a first surface of the positive electrode 111. In this case, a tail portion 147 and a non-tail portion 148 are also provided from one end to the other end of the positive electrode 111 in the width direction. The first core exposed portion 141a is joined to a positive electrode lead 120. In this case, on a second side of the positive electrode 111, a second core exposed portion (not shown), which is arranged at least partially facing the first core exposed portion 141a in the thickness direction of the positive electrode 111, may also be provided from one end to the other end of the positive electrode 111 in the width direction. Here, in FIG. 5, an outer edge of an insulating tape 161a that covers a positive electrode lead 120 and the first core exposed portion 141a is shown as a virtual line. Moreover, a cross section along a line A'-A' in FIG. 5 coincides with the cross section shown in FIG. 3.

The first core exposed portion that is joined to the positive electrode lead may be provided on the winding inner surface of the positive electrode. In this case, the non-tail portion is also preferably located on a winding start side of the first core exposed portion on the winding inner surface of the positive electrode in order to restrain removal of the positive electrode mixture layer.

In a negative electrode, the distal end of a second non-tail portion may be arranged facing a first flat portion of the first mixture layer adjacent to the first tail portion in the thickness direction of the negative electrode, and the distal end of a first non-tail portion may be arranged facing, in the thickness direction of the negative electrode, a second flat portion of a second mixture layer adjacent to a second tail portion. In this case, a negative electrode lead as an example of the electrode lead may be joined to the first core exposed portion.

The electrodes in the present disclosure may be applied to both positive and negative electrodes.

The secondary battery of the present disclosure may have following configurations.

Configuration 1: a secondary battery, comprising an electrode assembly having two electrodes different in polarity from each other, the two electrodes being wound through a separator along a longitudinal direction, in which a first surface of one electrode out of the two electrodes has a first core exposed portion that is arranged so as to be sandwiched in the longitudinal direction by a first mixture layer provided on the first surface and that is joined to an electrode lead, and a second surface of the one electrode has a second core exposed portion that is arranged so as to be sandwiched in the longitudinal direction by a second mixture layer provided on the second surface and that is arranged at least partially facing the first core exposed portion in a thickness direction, the first mixture layer has a first tail portion that is adjacent to an end portion of the first core exposed portion on a first side in the longitudinal direction and that has a plurality of first tails extending in the longitudinal direction, and a first non-tail portion that is adjacent to an end portion of the first core exposed portion on a second side in the longitudinal direction and that has a distal end extending in a substantially width direction, the second mixture layer has a second non-tail portion that is adjacent to an end portion of the second core exposed portion on the first side in the longitudinal direction and that has a distal end extending in the substantially width direction, and a second tail portion that is adjacent to an end portion of the second core exposed portion on the second side in the longitudinal direction and that has a plurality of second tails extending in the longitudinal direction, the distal end of the second non-tail portion is arranged facing, in the thickness direction, a first flat portion of the first mixture layer adjacent to the first tail portion, and the distal end of the first non-tail portion is arranged facing, in the thickness direction, a second flat portion of the second mixture layer adjacent to the second tail portion.

Configuration 2: the secondary battery according to Configuration 1, in which the one electrode is a positive electrode.

Configuration 3: the secondary battery according to Configuration 1, in which the one electrode is a negative electrode.

Configuration 4: the secondary battery according to any one of Configurations 1 to 3, in which a portion of the first mixture layer is arranged adjacent to the first core exposed portion in the width direction, and a portion of the second mixture layer is arranged adjacent to the second core exposed portion in the width direction.

Configuration 5: the secondary battery according to any one of Configurations 1 to 4, in which the first surface is a winding outer surface, and the first side in the longitudinal direction is a winding start side of the one electrode.

Configuration 6: the secondary battery according to any one of Configurations 1 to 4, in which the first surface is a winding inner surface, and the first side in the longitudinal direction is a winding finish side of the one electrode.

### REFERENCE SIGNS LIST

10, 110 Battery, 11, 111 Positive electrode, 12 Negative electrode, 13 Separator, 14 Electrode assembly, 16 Housing can, 17 Sealing assembly, 18, 19 Insulating plate, 20,120 Positive electrode lead, 21 Negative electrode lead, 23 Terminal plate, 23a Through-hole, 24 Lower vent member, 25 Insulating member, 26 Upper vent member, 27 Terminal cap, 27a Through-hole, 28 Gasket, 30 Cylindrical portion, 34 Grooved portion, 35 Circumferential edge portion, 38 Shoulder portion, 41 Positive electrode core, 41a, 141a First core exposed portion, 41b Second core exposed portion, 42 Positive electrode mixture layer, 42a First mixture layer, 42b Second mixture layer, 42c First flat portion, 42d Second flat portion, 47 First tail portion, 47a First tail, 48 First non-tail portion, 51, 151 Winding outer surface, 52 Winding inner surface, 57 Second tail portion, 57a Second tail, 58 Second non-tail portion, 61a, 61b, 161a Insulating tape, 68 Bottom portion, 74 Boundary portion, 147 Tail portion, 148 Non-tail portion.

## Claims

1. A secondary battery, comprising an electrode assembly having two electrodes different in polarity from each other, the two electrodes being wound through a separator along a longitudinal direction, wherein
a first surface of one electrode out of the two electrodes has a first core exposed portion that is arranged so as to be sandwiched in the longitudinal direction by a first mixture layer provided on the first surface and that is joined to an electrode lead, and a second surface of the one electrode has a second core exposed portion that is arranged so as to be sandwiched in the longitudinal direction by a second mixture layer provided on the second surface and that is arranged at least partially facing the first core exposed portion in a thickness direction,
the first mixture layer has a first tail portion that is adjacent to an end portion of the first core exposed portion on a first side in the longitudinal direction and that has a plurality of first tails extending in the longitudinal direction, and a first non-tail portion that is adjacent to an end portion of the first core exposed portion on a second side in the longitudinal direction and that has a distal end extending in a substantially width direction,
the second mixture layer has a second non-tail portion that is adjacent to an end portion of the second core exposed portion on the first side in the longitudinal direction and that has a distal end extending in the substantially width direction, and a second tail portion that is adjacent to an end portion of the second core exposed portion on the second side in the longitudinal direction and that has a plurality of second tails extending in the longitudinal direction,
the distal end of the second non-tail portion is arranged facing, in the thickness direction, a first flat portion of the first mixture layer adjacent to the first tail portion, and
the distal end of the first non-tail portion is arranged facing, in the thickness direction, a second flat portion of the second mixture layer adjacent to the second tail portion.

2. The secondary battery according to Claim 1, wherein the one electrode is a positive electrode.

3. The secondary battery according to Claim 1, wherein the one electrode is a negative electrode.

4. The secondary battery according to any one of Claims 1 to 3, wherein
a portion of the first mixture layer is arranged adjacent to the first core exposed portion in the width direction, and
a portion of the second mixture layer is arranged adjacent to the second core exposed portion in the width direction.

5. The secondary battery according to any one of Claims 1 to 3, wherein
the first surface is a winding outer surface, and
the first side in the longitudinal direction is a winding start side of the one electrode.

6. The secondary battery according to any one of Claims 1 to 3, wherein
the first surface is a winding inner surface, and
the first side in the longitudinal direction is a winding finish side of the one electrode.
